# EUROPÄISCHE PATENTSCHRIFT

(11) **EP 4 057 453 B1**
(45) Veröffentlichungstag und Bekanntmachung des Hinweises auf die Patenterteilung: **06.11.2024**
(21) Anmeldenummer: 21208812.4
(22) Anmeldetag: 17.11.2021
(51) Int. Cl.: H01R 13/631, H01R 13/187, H01R 101/00

(54) **HOCHVOLTMANAGEMENTSYSTEM INSBESONDERE FÜR FAHRZEUGENERGIESPEICHER**
HIGH VOLTAGE MANAGEMENT SYSTEM, ESPECIALLY FOR VEHICLE ENERGY STORAGE
SYSTÈME DE GESTION DE HAUTE TENSION, EN PARTICULIER POUR ACCUMULATEURS D'ÉNERGIE DE VÉHICULE

(30) Priorität: 11.03.2021 DE 102021105914
(43) Veröffentlichungstag der Anmeldung: 14.09.2022
(73) Patentinhaber: Marquardt GmbH, 78604 Rietheim-Weilheim (DE)
(72) Erfinder: SAINI, Manpreet, 78604 Rietheim-Weilheim (DE); THUM, Christian, 78576 Liptingen (DE)
(74) Vertreter: Staeger & Sperling Partnerschaftsgesellschaft mbB

(56) Entgegenhaltungen:
- US-A1- 2020 119 493
- US-B1- 9 270 052
- US-B2- 7 077 697

## Beschreibung

Die vorliegende Erfindung betrifft ein Batteriemanagementsystem (BMS) insbesondere für Fahrzeugenergiespeicher, wie Fahrzeugbatterien.

Bekannte Batteriemanagementsystem (BMS) oder einfach das Batteriemanagement ist eine Maßnahme, meist jedoch eine elektronische Schaltung, welche zur Überwachung, Regelung und zum Schutz von Akkumulatoren in Fahrzeugen dient.

Dabei handelt es sich z. B. um Ladezustandserkennung, Tiefentladeschutz, Überladeschutz oder auch um komplexe Systeme mit Datenschnittstellen. In vielen mobilen Geräten umfasst das BMS auch die automatische Umschaltung der Stromversorgung je nachdem, ob ein Ladegerät oder eine begrenzt speisefähige Datenschnittstelle angeschlossen ist.

Bei der Topologie von solchen Systemen werden auch steckbare Terminals für die Hochvolt-Terminals eingesetzt. Dabei handelt es sich um Lösungen, bei denen mehrere elektrische Kontaktbuchsen in einem komplexen Gehäuse integriert sind, die mit dem Gegengehäuse des Batteriemanagementsystems bei der Montage zusammen gesteckt werden. Hierzu erfolgt aber ein blindes Stecken, da bei dem Steckvorgang die Kontaktbuchsen in dem Gehäuse vom Verwender nicht gesehen werden. Da zusätzlich auch Lösungen mit einem nicht symmetrischen Interface existieren oder benötigt werden, gestaltet sich der Steckvorgang als eine Herausforderung.

Ferner sind die Abmessungen eines typischen Batteriemanagementsystems recht groß und demnach auch die systembedingten Toleranzen, die ein Gehäuse und die darin angeordneten Komponenten aufweisen. Somit tritt auch ein Toleranzproblem bei den Positionstoleranzen der Kontaktbuchsen auf. Die Kontaktbuchsen müssen einerseits möglichst exakt zu den korrespondierenden Positionen der Kontaktstecker auf der Gegenseite fluchten und andererseits auch gegenüber dem Gehäuse an definierten Positionen sitzen. Die Lage der Kontakte bestimmt unter anderem auch die Steck-und Ziehkräfte des Stecksystems.

In den Druckschriften DE 3 536 142 A1, DE 6002 6208 T2, DE 68913828 T2, DE 7047251 B, EP8938562 A2 und WO 2003103104A1 finden sich jeweils Lösungen betreffend das "blinde" Stecken ohne Sicht auf das Interface des Systems bei der Montage und betreffend der Toleranzproblematik. Diese Lösungen lassen sich aber nicht ohne weiteres und auch nicht mit dem gewünschten Erfolg auf ein Gehäuse und den Terminal-Bereich eines Batteriemanagementsystems (BMS) übertragen. Bereits aufgrund der teilweise sehr komplexen Geometrie bedarf es einer anderen, insbesondere flexiblen Lösung, wir die vorbesagten Probleme überwunden werden können.

Schwimmend gelagerte Kontakte oder Verbindungselemente sind zudem aus den Schriften US 2020/119493 A1, US 7 077 697 B2 und US 9 270 052 B1 bekannt.

Der vorliegenden Erfindung liegt daher die Aufgabe zugrunde, vorbesagte Nachteile zu überwinden und eine flexible, universell verwendbare und kostengünstige Lösung für Batteriemanagementsysteme (BMS) vorzuschlagen.

Ein Grundgedanke der Erfindung ist es dabei, die einzelnen Kontaktbuchsen flexible und sozusagen "schwimmend" zu Lagern und dabei insbesondere auch deren Busbar-Zuleitung flexible zu gestalten.

Erfindungsgemäß wird hierzu ein Terminalgehäuse gemäß Anspruch 1 vorgeschlagen. Das Terminalgehäuse weist einen Terminalbereich mit zylinderförmigen Buchsenkontakten (allgemein Kontakten) zur elektrischen Verbindung mit Gegenkontakten eines Batteriemanagementsystems (BMS) auf, wobei wenigstens eine stationär im Gehäuse angebrachte Kontakthalterung vorgesehen ist, an denen die zylinderförmigen Buchsenkontakte zumindest quer zur Steckrichtung beweglich (somit radial beweglich) gelagert sind. Zur Erzielung der besagten radialen Beweglichkeit ist hierzu die jeweilige Kontakthalterung aus je einer Mehrzahl an elastisch auslenkbaren Federarmen ausgebildet, die zusammen jeweils einen gemeinsamen Aufnahmeraum für die Aufnahme eines Buchsenkontaktes ausbilden und mit ihrem freien Federarmende gegen einen Außenmantel des in dem Aufnahmeraum aufgenommenen Buchsenkontaktes anliegen.

Anders ausgedrückt erstrecken sich mehrere Federarme in Steckrichtung von der Kontakthalterung weg und bilden ein gemeinsames Lager für einen Buchsenkontakt, der darin "schwimmend" aufgenommen werden kann. Beim Zusammenstecken mit dem Gegenstecker kann auch bei blindem Stecken und den systembedingten Toleranzen der Buchsenkontakt radial ausgelenkt werden und die beiden Gegenkontakte (Buchsenkontakt und z. B. Hochvoltpin) "finden" sich und können zusammen geführt werden.

In einer bevorzugten Ausgestaltung ist vorgesehen, dass das Maß für die radiale Beweglichkeit mindestens 10 % - 15% des Außen-Durchmessers des Buchsenkontaktes beträgt. So werden z. B. etwa 2 mm Radialspiel in jede radiale Auslenkung für einen Buchsenkontakt mit einem Durchmesser von 2 cm ermöglicht.

In einer besonders vorteilhaften Ausführungsform der Erfindung ist vorgesehen, dass die mehreren Federarme einer Kontaktaufnahme einer Kontakthalterung jeweils so zueinander angeordnet sind, dass diese gemeinsam einen zylinderförmigen Aufnahmeraum für einen zylinderförmigen Buchsenkontakt ausbilden. Der Kontakt wird dann darin zentral aufgenommen und kann radial beweglich mittels der flexibel auslenkbaren Federarme gehalten werden. Denkbar ist es auch, die Federarme als Schnapphaken auszubilden, deren Ende ein eine Nut am Kontakt eingreift, so dass eine feste Axiallagerung erzielt wird.

In ebenfalls bevorzugter Weise ist vorgesehen, dass die Kontakthalterung jeweils eine Durchtrittsöffnung für den jeweiligen Buchsenkontakt aufweist und sich der Buchsenkontakt zumindest mit einem Teilabschnitt durch die Durchtrittsöffnung hindurch erstreckt, während ein anderer Teilabschnitt von den jeweiligen Federarmen gehalten wird.

Ein weiterer Aspekt der vorliegenden Erfindung betrifft den Anschluss der Kontakte als solche. Bevorzugt ist hierzu vorgesehen, dass der zylinderförmige Buchsenkontakt an seinem der Steckseite gegenüberliegenden stirnseitigen Ende mit einem elektrisch leitenden flexiblen Busbar verbunden ist, insbesondere einem S-förmig, U-förmig, wellenförmig oder einem gebogenen Busbar, der weiter vorzugsweise mit seinem anderen Anschlussende elektrisch an einer Stromschiene fest verbunden insbesondere mit dieser verschraubt ist. Dies hat den Vorteil, dass der beweglich Kontakt auch über den Anschlussbereich über eine Beweglichkeit verfügt. Als Busbarleitungen können hierzu herkömmliche Leitungsmaterialen und Ausführungen verwendet werden.

In einer ebenfalls vorteilhaften Ausführungsform der Erfindung ist vorgesehen, dass der jeweilige Busbar quer zur Steckrichtung vom jeweiligen Buchsenkontakt weggeführt ist. Somit entsteht sozusagen eine 90°-Anschlussart, bei der der Busbaranschluss quer zur Steckrichtung weg montiert ist und dadurch die radiale Beweglichkeit begünstig bzw. unterstützt ist.

Weiter vorteilhaft ist es, wenn die Federarme an oder nahe zu ihrem freien Federarmende in Richtung des Aufnahmeraums für den Buchsenkontakt gebogen oder nach innen gekröpft ausgebildet sind oder eine Nase aufweisen, die sich radial nach innen in Richtung des Aufnahmeraums erstreckt. Dadurch ergibt sich ein definierter ringförmiger Anlageabschnitt an denen der Buchsenkontakt gehalten wird. Bevorzugt sind wenigstens 6, vorzugsweise 8 oder mehr Federarme je Buchsenkontakt vorgesehen.

In einer bevorzugten Ausgestaltung der Erfindung sind die Buchsenkontakte als jeweils einpolige Kontaktelemente bereitgestellt, so dass jeder Buchsenkontakt sozusagen seine unabhängige Funktion von den anderen Buchsenkontakten hat und an einer geeigneten Position am Kontaktträger positioniert werden kann, was eine hohe Flexibilität bei dem Design von solchen Terminalgehäusen erlaubt.

Weiter hat es sich als Vorteil gezeigt, wenn der mit der Fahrzeugbatterie über eine Leitung verbundene fahrzeugseitige Gegenkontakt (z. B. ein HV-Kontaktpin) eine sich in Steckrichtung erstreckende, als Berührschutz ausgeführte außenliegende Führung um den jeweiligen Kontaktpin herum aufweist, der ausgebildet ist, mit der Kontaktbuchse in elektrischen Kontakt gebracht zu werden, wobei dann der Berührschutz die Kontaktbuchse im gesteckten Zustand berührsicher umschließt und bevorzugt auch im nicht gesteckten Zustand ein Berührschutz vorhanden ist, der bis zur Spitze des Kontaktpins reicht. Daraus folgt, dass die Kontaktbuchse bzw. der Hochvolt-Buchsenkontakt entsprechend ausgebildet ist.

Die Erfindung wurde zunächst in ihrer vorteilhaften Form beschrieben, bei der die Buchsenkontakte wie beschrieben an dem Kontaktträger schwimmend gelagert sind. Denkbar wäre aber auch eine sogenannte kinematische Umkehr und Vertauschen der Kontaktpositionen. Daher betrifft ein weiterer Aspekt der Erfindung ein Terminalgehäuse aufweisend einen Terminalbereich mit Kontaktpins zur elektrischen Verbindung mit zylinderförmigen Hochvolt-Buchsenkontakten, bei welchem entsprechend die jeweilige Position von Buchsenkontakt und Kontaktpin im Stecksystem vertauscht sind, so dass der Kontaktpin auf der Terminalseite radialbeweglich gelagert ist und sich die jeweilige korrespondierende Kontaktbuchse auf der Gegenseite befindet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine schematische Darstellung einer Teilansicht einer Ausführungsform der Erfindung;
- Fig.2: eine schematische Schnittansicht ergänzt mit einem schematisch dargestellten Gegenstecker;
- Fig.3: eine Schnittansicht durch ein Ausführungsbeispiel im gesteckten Zustand;
- Fig. 4: eine Teil-Ansicht des Terminalgehäuses mit einer Kontaktbuchse, die via einer Busbarleitung elektrisch mit dem Stromverteiler verbunden ist und
- Fig. 5: eine beispielhafte Draufsicht auf eine Schnittstelle eines Terminalgehäuses mit vier Buchsenkontakten.

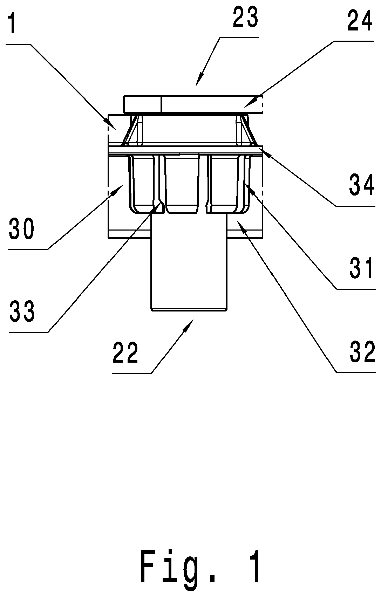

Im Folgenden wird die Erfindung anhand einer beispielhaften Ausführungsform mit Bezug auf die Figuren 1 bis 5 näher beschrieben, wobei gleiche Bezugszeichen auf gleiche funktionale und/oder strukturelle Merkmale in den Figuren hinweisen.

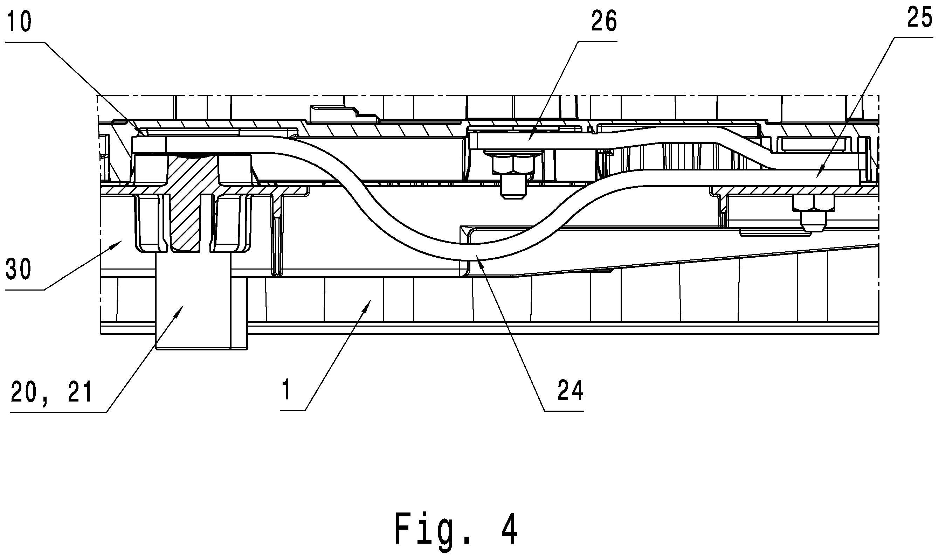

Zunächst ist in der Figur 1 eine schematische Darstellung einer Teilansicht einer Ausführungsform der Erfindung gezeigt, die Teil eines übergeordneten Terminalgehäuses 1 ist, welches ebenfalls in einer ausschnittsweisen Ansicht in der Figur 4 gezeigt ist. Das Terminalgehäuse 1 kann dabei komplex geformt sind und auf die Applikation entsprechend angepasst, um dieses mit der fahrzeugseitigen Schnittstelle zu verbinden.

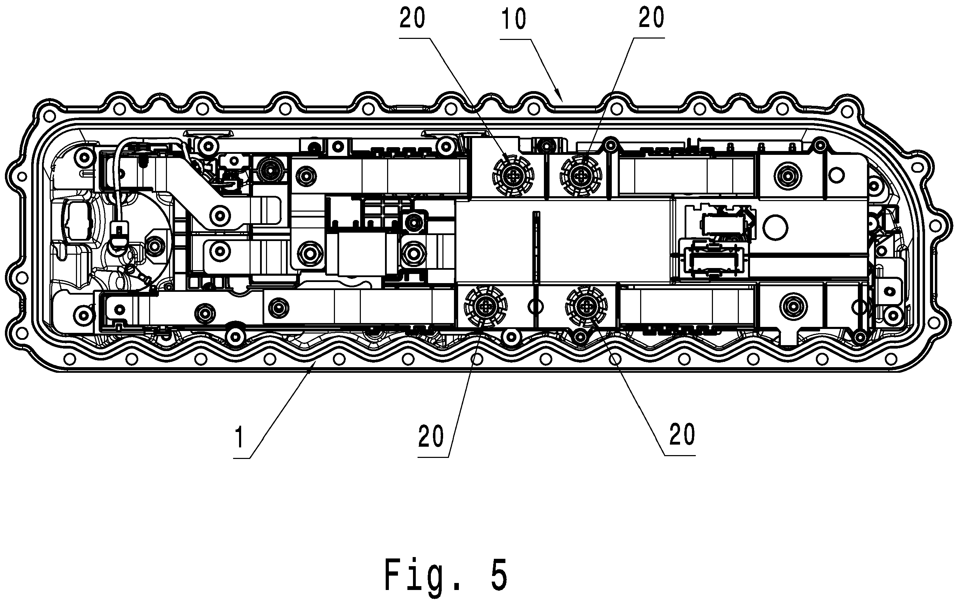

Mit Bezug auf die Figuren 4 und 5 ist zu erkennen, dass im Terminalgehäuse 1 ein Terminalbereich 10 mit zylinderförmigen Buchsenkontakten 20 vorgesehen ist, wovon beispielhaft nur ein solcher Buchsenkontakt 20 gezeigt ist. Mehrere dieser Buchsenkontakte 20 sind, wie in der Figur 5 gezeigt, im Terminalgehäuse 1 angeordnet.

Die Buchsenkontakte 20 sind zur elektrischen Verbindung mit Gegenkontakten 50 eines Batteriemanagementsystem (BMS) ausgestaltet. Im Terminalgehäuse 1 sind Kontakthalterungen 30 vorgesehen, an denen die zylinderförmigen Buchsenkontakten 20 gelagert sind. Ein solches Beispiel ist in den Figuren 1 bis 3 näher gezeigt. Der dargestellte Buchsenkontakt 20 ist quer zur Steckrichtung S beweglich an den elastisch auslenkbaren Federarmen 31 gelagert. Die Federarme bilden hierzu einen gemeinsamen Aufnahmeraum zur Aufnahme des Buchsenkontaktes 20. An ihrem freien Federarmende 32 besitzen die Federarme 30 eine Nase 33, die in Richtung des Aufnahmeraums hervorsteht. Der Buchsenkontakt 20 lagert demnach an dem ringförmigen Abschnitt an den Nasen 33.

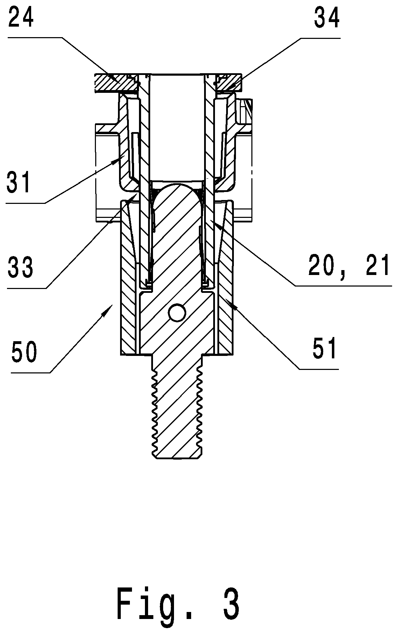

Die Federarme 30 sind an dem Halteflansch 34 angebunden und erstrecken sich in Steckrichtung S. Der Halteflansch 34 besitzt eine Durchtrittsöffnung für den jeweiligen Buchsenkontakt 20. Wie in den Ansichten der Figuren 1 und 3 zu erkennen, erstreckt sich der Buchsenkontakt 20 mit einem oberen Teilabschnitt durch die Durchtrittsöffnung hindurch, während ein anderer, zentraler in etwa in der Mitte des Kontakts 20 in Steckrichtung betrachtet, liegender Teilabschnitt von den jeweiligen Federarmen 31 gehalten wird.

In der Ansicht der Figur 4 ist auch die Verbindung des zylinderförmigen Buchsenkontakts 20 mit einer Busbar (Busbarleitung) 24 gezeigt. Der Buchsenkontakt 20 verfügt an seinem der Steckseite 22 gegenüberliegenden stirnseitigen Ende 23 über einen elektrisch leitenden flexiblen Busbaranschluss an dem der Busbar 24 verbunden ist. Der Verlauf des Busbar 24 zeigt eine Wellenform. An seinem anderen Anschlussende 25 ist dieser elektrisch an einer Stromschiene 26 verschraubt. In der Figur 5 sind weitere Busbarleitungen 24 dargestellt, die jeweils zu den vier Buchsenkontakten 20 führen. Sämtliche dieser Busbarleitungen 24 sind mit einem Toleranzausgleichabschnitt in Form einer nach untern gebogenen Welle ausgeführt.

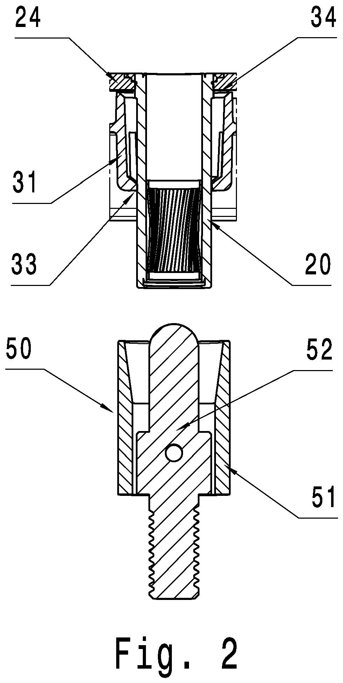

In den Figuren 2 und 3 ist jeweils der mit der Fahrzeugbatterie über eine Leitung verbundene Gegenkontakt 50 gezeigt, der eine sich in Steckrichtung erstreckende als Berührschutz ausgeführte Führung 51 besitzt, sowie einen zentralen Kontaktpin 52, der von dem Berührschutz zylindrisch umgeben ist. In der Figur 3 ist ersichtlich, dass die Kontaktbuchse im gesteckten Zustand vom elektrisch isolierenden Berührschutz umschlossen ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Terminalgehäuse (1) aufweisend einen Terminalbereich (10) mit zylinderförmigen Hochvolt-Buchsenkontakten (20) zur elektrischen Verbindung mit Gegenkontakten (50) eines Batteriemanagementsystems (BMS),
wobei wenigstens eine stationär im Terminalbereich (10) angebrachte Kontakthalterung (30) vorgesehen ist, an welcher jeweils ein zylinderförmiger Hochvolt-Buchsenkontakt (20) zumindest quer zur Steckrichtung (S) schwimmend beweglich gelagert ist,
wobei die jeweilige Kontakthalterung (30) zur Erzielung einer sich aus der Beweglichkeit zumindest quer zur Steckrichtung (S) ergebenden radialen Beweglichkeit aus je einer Mehrzahl an elastisch auslenkbaren Federarmen (31) ausgebildet ist, die zusammen jeweils einen gemeinsamen Aufnahmeraum für die Aufnahme des jeweiligen Hochvolt-Buchsenkontaktes (20) ausbilden und mit ihrem freien Federarmende (32) gegen einen Außenmantel (21) des in dem Aufnahmeraum aufgenommenen Hochvolt-Buchsenkontaktes (20) anliegen, sodass der Hochvolt-Buchsenkontakt (20) in dem Aufnahmeraum schwimmend gelagert und ausgebildet ist, sich bei einem Zusammenführen des Hochvolt-Buchsenkontakts (20) mit einem jeweiligen Gegenkontakt (50) am Gegenkontakt (50) auszurichten.

2. Terminalgehäuse (1) nach Anspruch 1, **dadurch gekennzeichnet, dass** die mehreren Federarme (31) einer Kontakthalterung (30) jeweils so zueinander angeordnet sind, dass diese gemeinsam einen zylinderförmigen Aufnahmeraum für einen Buchsenkontakt (20) ausbilden.

3. Terminalgehäuse (1) nach Anspruch 1 oder 2, **dadurch gekennzeichnet, dass** die Kontakthalterung (30) jeweils eine Durchtrittsöffnung für den jeweiligen Buchsenkontakt (20) aufweist und sich der Buchsenkontakt (20) zumindest mit einem Teilabschnitt durch die Durchtrittsöffnung hindurch erstreckt, während ein anderer Teilabschnitt von den jeweiligen Federarmen (31) gehalten wird.

4. Terminalgehäuse (1) nach einem der vorhergehenden Ansprüche, **dadurch gekennzeichnet, dass** der zylinderförmige Buchsenkontakt (20) an seinem der Steckseite (22) gegenüberliegenden stirnseitigen Ende (23) mit einem elektrisch leitenden flexiblen Busbar (24) verbunden ist, insbesondere einem S-förmig, U-förmig, wellenförmig oder einem gebogenen Busbar (24), der weiter vorzugsweise mit seinem anderen Anschlussende (25) elektrisch an einer Stromschiene (26) fest verbunden insbesondere mit dieser verschraubt ist.

5. Terminalgehäuse (1) nach dem vorhergehenden Anspruch, **dadurch gekennzeichnet, dass** der jeweilige Busbar quer zur Steckrichtung vom jeweiligen Buchsenkontakt (20) weggeführt ist.

6. Terminalgehäuse (1) nach einem der vorhergehenden Ansprüche, **dadurch gekennzeichnet, dass** die radiale Beweglichkeit mindestens 10 % - 15% des Außen-Durchmessers des Buchsenkontaktes (20) beträgt.

7. Terminalgehäuse (1) nach einem der vorhergehenden Ansprüche, **dadurch gekennzeichnet, dass** die Federarme (31) an oder nahe zu ihrem freien Federarmende (32) in Richtung des Aufnahmeraums für den Buchsenkontakt (20) gebogen ausgebildet sind oder eine Nase (33) aufweisen, die sich radial nach innen in Richtung des Aufnahmeraums erstreckt.

8. Terminalgehäuse (1) nach einem der vorhergehenden Ansprüche, **dadurch gekennzeichnet, dass** wenigstens 6, vorzugsweise 8 oder wenigstens 8 Federarme (30) je Buchsenkontakt (20) vorgesehen sind.

9. Terminalgehäuse (1) nach einem der vorhergehenden Ansprüche, **dadurch gekennzeichnet, dass** die Buchsenkontakte (20) einpolige Kontaktelemente darstellen.

10. Terminalgehäuse (1) nach einem der vorhergehenden Ansprüche, **dadurch gekennzeichnet, dass** der Hochvolt-Buchsenkontakt (20) ausgebildet ist, mit dem mit der Fahrzeugbatterie über eine Leitung verbundenen Gegenkontakt (50), welcher eine sich in Steckrichtung erstreckende als Berührschutz ausgeführte Führung (51) um einen Kontaktpin (52) herum aufweist, in elektrischen Kontakt gebracht und durch den Berührschutz (51) im gesteckten Zustand umschlossen zu werden.

11. Terminalgehäuse (1) aufweisend einen Terminalbereich (10) mit Kontaktpins (52) zur elektrischen Verbindung mit zylinderförmigen Hochvolt-Buchsenkontakten (20) eines Batteriemanagementsystems (BMS),
wobei wenigstens eine stationär im Terminalbereich (10) angebrachte Kontakthalterung (30) vorgesehen ist, an welcher jeweils ein Kontaktpin (52) zumindest quer zur Steckrichtung (S) schwimmend beweglich gelagert ist,
wobei die jeweilige Kontakthalterung (30) zur Erzielung einer sich aus der Beweglichkeit zumindest quer zur Steckrichtung (S) ergebenden radialen Beweglichkeit aus je einer Mehrzahl an elastisch auslenkbaren Federarmen (31) ausgebildet ist, die zusammen jeweils einen gemeinsamen Aufnahmeraum für die Aufnahme des jeweiligen Kontaktpins (52) ausbilden und mit ihrem freien Federarmende (32) gegen einen Außenmantel des in dem Aufnahmeraum aufgenommenen Kontaktpins (52) anliegen, sodass der Kontaktpin (52) in dem Aufnahmeraum schwimmend gelagert und ausgebildet ist, sich bei einem Zusammenführen des Kontaktpins (52) mit einem jeweiligen Hochvolt-Buchsenkontakt (20) am Hochvolt-Buchsenkontakt (20) auszurichten.

## Claims

1. A terminal housing (1) having a terminal region (10) with cylindrical high-voltage socket contacts (20) for electrical connection to mating contacts (50) of a battery management system (BMS),
wherein at least one stationary contact holder (30) is provided in the terminal area (10) on which a cylindrical high-voltage socket contact (20) is respectively mounted so as to float at least transversely to the plug-in direction (S),
wherein each of the respective contact holders (30) is formed from a plurality of elastically deflectable spring arms (31) in order to achieve a radial mobility resulting from the mobility at least transversely to the plug-in direction (S) which together form a common receiving space for receiving the respective high-voltage socket contact (20) and bear with their free spring arm end (32) against an outer casing (21) of the high-voltage socket contact (20) received in the receiving space, so that the high-voltage socket contact (20) is floatingly supported in the receiving space and is designed to align itself with the mating contact (50) when the high-voltage socket contact (20) is brought together with a respective mating contact (50).

2. The terminal housing (1) according to claim 1, **characterized in that** the plurality of spring arms (31) of a contact holder (30) are each arranged relative to one another such that they jointly form a cylindrical receiving space for a socket contact (20).

3. The terminal housing (1) according to claim 1 or 2, **characterized in that** the contact holder (30) has a passage opening for the respective socket contact (20), and the socket contact (20) extends at least with a subportion through the passage opening, while another subportion is held by the respective spring arms (31).

4. The terminal housing (1) according to any one of the preceding claims, **characterized in that** the cylindrical socket contact (20) is connected at its front end (23) opposite the plug-in side (22) to an electrically conductive flexible busbar (24), in particular an S-shaped, U-shaped, wave-shaped, or curved busbar (24), which is also preferably firmly connected electrically with its other connecting end (25) to a busbar (26), in particular screwed thereto.

5. The terminal housing (1) according to the preceding claim, **characterized in that** the respective bus bar is guided away from the respective socket contact (20) transversely to the plug-in direction.

6. The terminal housing (1) according to any one of the preceding claims, **characterized in that** the radial mobility is at least 10%-15% of the outer diameter of the socket contact (20).

7. The terminal housing (1) according to any one of the preceding claims, **characterized in that** the spring arms (31) are bent at or near their free spring arm end (32) in the direction of the receiving space for the socket contact (20) or have a nose (33) which extends radially inward in the direction of the receiving space.

8. The terminal housing (1) according to any one of the preceding claims, **characterized in that** at least 6, preferably 8, or at least 8 spring arms (30) are provided per bushing contact (20).

9. The terminal housing (1) according to any one of the preceding claims, **characterized in that** the bushing contacts (20) constitute single-pole contact elements.

10. The terminal housing (1) according to any one of the preceding claims, **characterized in that** the high-voltage socket contact (20) is designed to be brought into electrical contact with the mating contact (50), which is connected to the vehicle battery via a line and which has a guide (51) that is embodied as a contact protection extending in the plug-in direction around a contact pin (52), and to be enclosed by the contact protection (51) in the plugged-in state.

11. A terminal housing (1) having a terminal region (10) with contact pins (52) for electrical connection to cylindrical high-voltage socket contacts (20) of a battery management system (BMS),
wherein at least one stationary contact holder (30) is provided which is mounted in the terminal region (10) and on which a contact pin (52) is supported so as to be floatingly movable at least transversely to the plug-in direction (S),
wherein each of the contact holders (30) is formed from a plurality of elastically deflectable spring arms (31) in order to achieve a radial mobility resulting from the mobility at least transversely to the plug-in direction (S) which together form a common receiving space for receiving the respective contact pin (52) and bear with their free spring arm end (32) against an outer casing of the contact pin (52) received in the receiving space, so that the contact pin (52) is floatingly supported in the receiving space and is designed to align itself with the high-voltage socket contact (20) when the contact pin (52) is brought together with a respective high-voltage socket contact (20).

## Revendications

1. Boîtier de borne (1) présentant une zone de borne (10) pourvue de contacts femelles haute tension (20) cylindriques pour la liaison électrique avec des contacts homologues (50) d'un système de gestion de batterie (BMS),
dans lequel au moins un support de contact (30) installé de manière stationnaire dans la zone de borne (10) est prévu, au niveau duquel respectivement un contact femelle haute tension (20) cylindrique est monté mobile de manière flottante au moins transversalement à la direction d'enfichage (S),
dans lequel le support de contact (30) respectif, pour obtenir une mobilité radiale résultant de la mobilité au moins transversalement à la direction d'enfichage (S), est réalisé respectivement à partir d'une pluralité de bras de ressort (31) à excursion élastique qui réalisent ensemble respectivement un espace de réception commun pour recevoir le contact femelle haute tension (20) respectif et qui sont adjacents par leur extrémité de bras de ressort (32) libre à une gaine extérieure (21) du contact femelle haute tension (20) reçu dans l'espace de réception de sorte que le contact femelle haute tension (20) est monté flottant dans l'espace de réception et est réalisé lors de l'assemblage du contact femelle haute tension (20) avec un contact homologue (50) respectif pour s'aligner sur le contact homologue (50).

2. Boîtier de borne (1) selon la revendication 1, **caractérisé en ce que** les plusieurs bras de ressort (31) d'un support de contact (30) sont respectivement disposés les uns par rapport aux autres de façon à réaliser ensemble un espace de réception cylindrique pour un contact femelle (20).

3. Boîtier de borne (1) selon la revendication 1 ou 2, **caractérisé en ce que** le support de contact (30) présente respectivement une ouverture de passage pour le contact femelle (20) respectif et le contact femelle (20) s'étend au moins avec une section partielle à travers l'ouverture de passage alors qu'une autre section partielle est retenue par les bras de ressort (31) respectifs.

4. Boîtier de borne (1) selon l'une quelconque des revendications précédentes, **caractérisé en ce que** le contact femelle (20) cylindrique est relié à son extrémité frontale (23) opposée au côté enfichage (22) à une barre omnibus (24) flexible, électriquement conductrice, en particulier à une barre omnibus en forme de S, en forme de U, ondulée ou courbe, qui est de plus grande préférence reliée électriquement par son autre extrémité de connexion (25) solidement à une barre conductrice (26), en particulier vissée à celle-ci.

5. Boîtier de borne (1) selon la revendication précédente, **caractérisé en ce que** la barre omnibus respective s'éloigne transversalement à la direction d'enfichage du contact femelle (20) respectif.

6. Boîtier de borne (1) selon l'une quelconque des revendications précédentes, **caractérisé en ce que** la mobilité radiale correspond à au moins 10 % à 15 % du diamètre extérieur du contact femelle (20).

7. Boîtier de borne (1) selon l'une quelconque des revendications précédentes, **caractérisé en ce que** les bras de ressort (31) sont réalisés au niveau ou presqu'au niveau de leur extrémité de bras de ressort (32) libre de manière courbe en direction de l'espace de réception pour le contact femelle (20) ou présentent un bec (33) qui s'étend radialement vers l'intérieur en direction de l'espace de réception.

8. Boîtier de borne (1) selon l'une quelconque des revendications précédentes, **caractérisé en ce qu'**au moins 6, de préférence 8 ou au moins 8 bras de ressort (30) sont prévus par contact femelle (20).

9. Boîtier de borne (1) selon l'une quelconque des revendications précédentes, **caractérisé en ce que** les contacts femelles (20) sont des éléments de contact unipolaires.

10. Boîtier de borne (1) selon l'une quelconque des revendications précédentes, **caractérisé en ce que** le contact femelle haute tension (20) est réalisé pour être mis en contact électrique avec le contact homologue (50) relié à la batterie de véhicule par un câble et qui présente un dispositif de guidage (51), réalisé sous la forme d'une protection contre les contacts s'étendant dans la direction d'enfichage, et pour être entouré par la protection contre les contacts (51) à l'état enfiché.

11. Boîtier de borne (1) présentant une zone de borne (10) avec des broches de contact (52) pour la liaison électrique avec des contacts femelles haute tension (20) cylindriques d'un système de gestion de batterie (BMS),
dans lequel au moins un support de contact (30) installé de manière stationnaire dans la zone de borne (10) est prévu, au niveau duquel respectivement une broche de contact (52) est montée mobile de manière flottante au moins transversalement à la direction d'enfichage (S),
dans lequel le support de contact (30) respectif est réalisé pour obtenir une mobilité radiale résultant de la mobilité au moins transversalement à la direction d'enfichage (S) à partir respectivement d'une pluralité de bras de ressort (31) à excursion élastique qui réalisent ensemble respectivement un espace de réception commun pour recevoir la broche de contact (52) respective et qui sont adjacents avec leur extrémité de bras de ressort (32) libre à une gaine extérieure de la broche de contact (52) reçue dans l'espace de réception de sorte que la broche de contact (52) est montée flottante dans l'espace de réception et est réalisée lors de l'assemblage de la broche de contact (52) avec un contact femelle haute tension (20) respectif pour s'aligner sur le contact femelle haute tension (20).
